# EUROPÄISCHE PATENTSCHRIFT

(11) **EP 3 302 920 B1**
(45) Veröffentlichungstag und Bekanntmachung des Hinweises auf die Patenterteilung: **01.04.2026**
(21) Anmeldenummer: 16722172.0
(22) Anmeldetag: 10.05.2016
(51) Int. Cl.: B29C 48/92, B29C 48/25, B29C 48/27, B29C 48/285, B29C 48/10, B29B 7/60

(54) **VERFAHREN FÜR DIE SCHRITTWEISE FÜHRUNG EINES MASCHINENBEDIENERS EINER EXTRUSIONSVORRICHTUNG BEIM WECHSEL VON EINER EINSATZREZEPTUR AUF EINE FOLGEREZEPTUR**
METHOD FOR THE STEP-BY-STEP GUIDANCE OF A MACHINE OPERATOR OF AN EXTRUSION DEVICE WHEN CHANGING FROM AN APPLICATION FORMULA TO A SUBSEQUENT FORMULA
PROCÉDÉ POUR LE GUIDAGE PAS À PAS D'UN OPÉRATEUR D'UN DISPOSITIF D'EXTRUSION LORS DU CHANGEMENT D'UNE FORMULATION D'UTILISATION À UNE FORMULATION CONSÉCUTIVE

(30) Priorität: 08.06.2015 DE 102015108972
(43) Veröffentlichungstag der Anmeldung: 11.04.2018
(73) Patentinhaber: Windmöller & Hölscher KG, 49525 Lengerich (DE)
(72) Erfinder: KULGEMEYER, Tobias, 49170 Hagen a.T.W. (DE); MINNERUP, Jens, 48282 Emsdetten (DE); BACKMANN, Martin, 49525 Lengerich (DE)
(86) Internationale Anmeldenummer: PCT/EP2016/060441
(87) Internationale Veröffentlichungsnummer: WO 2016/198220

(56) Entgegenhaltungen:
- EP-A1- 0 899 079
- EP-A2- 1 188 539
- DE-A1- 102004 051 196
- DE-A1- 102013 100 812
- DE-A1- 102013 100 866
- DE-U1- 202004 015 743
- JP-A- H0 724 899
- JP-A- S6 114 930
- US-A1- 2005 265 119

## Beschreibung

Die vorliegende Erfindung betrifft ein Verfahren für die schrittweise Führung eines Maschinenbedieners einer Extrusionsvorrichtung für eine Folienmaschine beim Wechsel von einer Einsatzrezeptur auf eine Folgerezeptur.

Es ist grundsätzlich bekannt, dass auf Folienmaschinen mit Extrusionsvorrichtungen unterschiedliche Produkte hergestellt werden können. Die Produkte unterscheiden sich dabei üblicherweise voneinander durch unterschiedliche Rezepturen. So wird sequenziell nacheinander eine Reihe unterschiedlicher Aufträge mit unterschiedlichen Rezepturen abgearbeitet. Für den Übergang zwischen zwei Rezepturen erfolgt ein Wechsel von einer aktuellen im Einsatz befindlichen Einsatzrezeptur auf eine nachfolgende Folgerezeptur.

Wie in den Druckschriften DE 10 2013 100812 A1, JP H07 24899 A, EP 1 188 539 A2, EP 0 899 079 A1, DE 10 2004 051196 A1 und DE 10 2013 100866 A1 zu entnehmen ist, wird dieser Wechsel in bekannten Lösungen üblicherweise manuell und auf Basis der Erfahrung des Maschinenbedieners durchgeführt.

Nachteilhaft bei den bekannten Lösungen ist es, dass ausschließlich auf Basis des Wissens des Maschinenbedieners die Qualität und vor allem auch die notwendige Zeit für die Durchführung des Wechsels von einer Einsatzrezeptur auf die Folgerezeptur beruhen. So kann insbesondere bei unerfahrenen Maschinenbedienern eine sehr hohe Ausschussquote für diesen Wechsel zwischen den Rezepturen erzielt werden. Insbesondere ist keine eindeutige und kontinuierliche Qualitätsanforderung für alle Wechsel zwischen Einsatzrezepturen und Folgerezepturen auf diese Weise erreichbar. Nicht zuletzt können Fehlermöglichkeiten nicht ausgeschlossen werden.

Es ist Aufgabe der vorliegenden Erfindung, die voranstehend beschriebenen Probleme zumindest teilweise zu beheben. Insbesondere ist es Aufgabe der vorliegenden Erfindung, in kostengünstiger und einfacher Weise den Rezepturwechsel zu verbessern, vorzugsweise sicherer und/oder schneller zu machen.

Die voranstehende Aufgabe wird gelöst durch ein Verfahren mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren gemäß Hauptanspruch beschrieben sind, selbstverständlich auch im Zusammenhang mit dem erfindungsgemäßen Verfahren gemäß Unteransprüchen und jeweils umgekehrt, so dass bezüglich der Offenbarung zu den einzelnen Erfindungsaspekten stets wechselseitig Bezug genommen wird bzw. werden kann.

Gemäß einem erfindungsgemäßen Verfahren für die schrittweise Führung eines Maschinenbedieners an einer Extrusionsvorrichtung für eine Folienmaschine beim Wechsel von einer Einsatzrezeptur auf eine Folgerezeptur werden die folgenden Schritte befolgt:
- Erkennen einer Rezepturwechselanforderung,
- Anzeigen der Rezepturwechselanforderung für den Maschinenbediener,
- Anzeigen zumindest eines durchzuführenden Abschlussschritts für die Einsatzrezeptur,
- Erkennen einer Bestätigung des Maschinenbedieners für den zumindest einen Abschlussschritt,
- Anzeigen zumindest eines durchzuführenden Vorbereitungsschritts für die Folgerezeptur,
- Erkennen einer Bestätigung des Maschinenbedieners für den zumindest einen Vorbereitungsschritt,
- Abschließen des Wechsels von der Einsatzrezeptur auf die Folgerezeptur.

Ein erfindungsgemäßes Verfahren wird insbesondere in einer Regelungseinheit bzw. einer Kontrolleinheit einer Extrusionsvorrichtung durchgeführt. Das erfindungsgemäße Verfahren wird dabei ausgelöst durch das Erkennen einer Rezepturwechselanforderung. Dies kann sowohl ein manuelles als auch ein automatisches Erkennen beinhalten. So kann beispielsweise der Maschinenbediener eine entsprechende Rezepturwechselanforderung in ein Terminal der Extrusionsvorrichtung eingeben, so dass diese manuelle Eingabe als Rezepturwechselanforderung vom erfindungsgemäßen Verfahren erkannt wird und die weiteren Schritte auslöst.

Die Anzeige der Rezepturwechselanforderungen kann sowohl als Bestätigung einer manuell eingegebenen Rezepturwechselanforderung als auch als Aufforderung an den Maschinenbediener verstanden werden, die nachfolgenden notwendigen manuellen Schritte selbst nun durchzuführen. Dies kann zum Beispiel auf einer Anzeigevorrichtung der Extrusionsvorrichtung, insbesondere einem entsprechenden Display, durchgeführt werden.

Erfindungsgemäß wird nun zumindest ein durchzuführender Abschlussschritt für die Einsatzrezeptur angezeigt. Anschließend erfolgt ein Erkennen einer Bestätigung des Maschinenbedieners für den zumindest einen Abschlussschritt. In gleicher Weise erfolgt auch die Korrelation zwischen dem Anzeigen und dem Erkennen einer Bestätigung mit Bezug auf einen entsprechenden Vorbereitungsschritt der Folgerezeptur. Grundsätzlich ist zu unterscheiden zwischen den Abschlussvorgängen für die Einsatzrezeptur und den Folgevorgängen für die Folgerezeptur. So müssen die Abschlussschritte durchgeführt werden, um die Einsatzrezeptur vollständig zu beenden. Dies bedeutet zum Beispiel das Reduzieren der Füllmenge der Einsatzmaterialien in unterschiedlichen Vorlagevorrichtungen sowie die Entfernung von Einsatzmaterialien aus solchen Vorlagevorrichtungen. Auch Reinigungsschritte innerhalb solcher Vorlagevorrichtungen, um die letzten Reste von Einsatzmaterial einer Einsatzrezeptur aus den Vorlagevorrichtungen zu entfernen, können als Abschlussschritt im Sinne der vorliegenden Erfindung verstanden werden.

Vorbereitungsschritte sind insbesondere Korrelationen der Extrusionsvorrichtung mit Folgematerialien der Folgerezeptur. So kann beispielsweise das Anschließen von zugehörigen Fördereinrichtungen an der Folgerezeptur bzw. Vorlagebehältern von Folgematerialien der Folgerezeptur als ein Vorbereitungsschritt verstanden werden. Dabei können auch geänderte Ventilstellungen, weitere Reinigungsmöglichkeiten oder neue Drehrichtungen von Dosierschnecken ebenfalls im Rahmen von Vorbereitungsschritten für ein erfindungsgemäßes Verfahren eingesetzt werden.

Erfindungsgemäß erfolgt für jeden durchzuführenden Schritt, also jeden Abschlussschritt und jeden Vorbereitungsschritt, eine entsprechende Anzeige für den Maschinenbediener. Diese Anzeige ist insbesondere sensorisch durch den Maschinenbediener wahrnehmbar und kann zum Beispiel in visuell oder akustisch wahrnehmbarer Weise erfolgen. In ähnlicher Weise kann der Maschinenbediener seine Bestätigung für die Durchführung bzw. den Abschluss des jeweiligen Schrittes abgeben. Dabei kann eine Sensorik das Erkennen der Bestätigung des Maschinenbedieners unterstützen. So ist es möglich, dass, zum Beispiel durch Drücken eines entsprechenden Knopfes, der Maschinenbediener direkt eine Erkennung der Bestätigung des Abschlussschritts ermöglicht. Auch mithilfe einer Sensorik kann auf indirekte Weise durch eine entsprechende Handlung des Maschinenbedieners die Bestätigung des Abschlussschrittes oder des Vorbereitungsschritts erkannt werden.

Sobald sämtliche Abschlussschritte und Vorbereitungsschritte sowohl angezeigt als auch hinsichtlich der Bestätigung der Durchführung erkannt worden sind, erfolgt das Abschließen des Wechsels von der Einsatzrezeptur auf die Folgerezeptur. Darunter ist sowohl in aktiver als auch in passiver Weise zu verstehen, dass ein zugehöriges Regelungsverfahren einer Kontrolleinheit für das erfindungsgemäße Verfahren beendet wird. Erst wenn sämtliche vorgegebenen Vorbereitungsschritte und Abschlussschritte finalisiert und bestätigt worden sind, erfolgt der Schritt des Abschlusses des Wechsels, so dass eine Kontrollvorrichtung in zugehöriger Weise nun in einen Normalbetriebsmodus für die Produktion der Folgerezeptur umschalten kann. Dies kann sowohl sensorisch erfolgen als auch durch aktive Eingabe in manueller Weise durch den Maschinenbediener.

Unter einer Folienmaschine ist im Sinne der vorliegenden Erfindung insbesondere eine Folienblasmaschine oder eine sogenannte Castfolienmaschine zu verstehen. Selbstverständlich sind für ein erfindungsgemäßes Verfahren jedoch auch alle weiteren Ausführungsformen von Folienmaschinen denkbar, um die erfindungsgemäßen Vorteile erzielen zu können.

Die Einsatzrezeptur ist dabei die Summe aller Einsatzmaterialien, welche sich aktuell in der Produktion befindet, um ein zugehöriges Produkt auf Basis der Einsatzrezeptur herzustellen. Ähnliches gilt für die Folgerezeptur, bei welcher aus einer Vielzahl von Folgematerialien ein entsprechendes Produkt der Folgerezeptur herstellbar ist. Sobald der Wechsel abgeschlossen ist, wird aus der Folgerezeptur die Einsatzrezeptur für den nachfolgenden sequenziellen Wechsel.

Ein erfindungsgemäßes Verfahren bringt diverse Vorteile mit sich. So kann auf diese Weise insbesondere ein Maschinenbediener mit deutlich geringerer Erfahrung mit hoher Geschwindigkeit und großer Sicherheit einen Wechsel von einer Einsatzrezeptur auf eine Folgerezeptur durchführen. Insbesondere werden Fehlstrategien bzw. fehlerhafte Sequenzen von einzelnen Wechselschritten innerhalb des Wechsels von den Rezepturen vermieden bzw. das Risiko einer solchen Fehlbelegung deutlich reduziert. Mit anderen Worten wird eine rückgekoppelte Führung des Maschinenbedieners zur Verfügung gestellt, so dass eine regelmäßige Interaktion zwischen den Handlungen des Maschinenbedieners, automatisch durchgeführten Schritten des Wechsels und zugehörigen Rückbestätigungen von der Durchführung der Schritte zur Verfügung gestellt wird.

Es kann von Vorteil sein, wenn bei einem erfindungsgemäßen Verfahren nach dem Erkennen einer Bestätigung des Maschinenbedieners wenigstens ein automatischer Schritt als Teil des Wechsels von der Einsatzrezeptur auf die Folgerezeptur durchgeführt wird, insbesondere wenigstens einer der folgenden:
- Reinigen einer Saugförderung,
- Reinigen eines Vorlagebehälters,
- Reinigen eines Wägetrichters,
- Reinigen einer Dosierschnecke,
- Befüllen eines Vorlagebehälters mit einem Folgematerial der Folgerezeptur,
- Änderung der Temperatur eines Extruders.

Bei der voranstehenden Aufzählung handelt es sich um eine nicht abschließende Liste. Selbstverständlich können auch zwei oder mehr der voranstehend beschriebenen Schritte parallel oder zumindest überlappend parallel durchgeführt werden. Dies erlaubt es eine noch weiter verbesserte Ausführung des Verfahrens zu ermöglichen, insbesondere deutlich schneller als in rein manueller Weise. Auch die Sicherheit der richtigen sequenziellen Abarbeitung wird durch die Automation eines oder mehrere Schritte deutlich verbessert. Nicht zuletzt können auch zeitliche Schnittstellen bestehen, welche zwischen manuellen und automatischen Schritten definiert sind. So kann beispielsweise ein Reinigungsschritt in definierter Zeitspanne durchgeführt werden, insbesondere in Bezug auf einen vorher ausgeführten Abschlussschritt bzw. Vorbereitungsschritt. Dabei können die zeitlichen Angaben in absoluter Weise oder in relativen Bezugspunkten vorgesehen werden.

Vorteilhaft ist es ebenfalls, wenn bei einem erfindungsgemäßen Verfahren beim Wechsel von der Einsatzrezeptur auf die Folgerezeptur jedes Einsatzmaterial der Einsatzrezeptur auf ein Folgematerial der Folgerezeptur geändert wird. Mit anderen Worten wird jedes eingesetzte Material vom Einsatzmaterial in ein Folgematerial überführt. Dabei kann jedes Material auch als Komponente der jeweiligen Rezeptur bezeichnet werden. Insbesondere ist dabei zu berücksichtigen, dass ein Wechsel von einem Einsatzmaterial auf ein Folgematerial selbstverständlich auch bedeuten kann, dass das Folgematerial dem Einsatzmaterial entspricht. Auch eine reine prozentuale Änderung in der Zusammensetzung der Rezeptur ändert demnach das Einsatzmaterial auf das Folgematerial nach dieser Definition. Weiter ist es auch denkbar, dass unterschiedlich komplexe Rezepturen eingesetzt werden, so dass beispielsweise auf ein leeres Einsatzmaterial ein tatsächlich vorhandenes explizites Folgematerial folgt. Auch in umgekehrter Weise kann es sein, dass ein vorhandenes Einsatzmaterial dieser Vorlagevorrichtung anschließend nicht weiter verwendet wird, sondern das darin enthaltene Material darin verbleibt oder ausgeleert wird. Nicht zuletzt ist darauf hinzuweisen, dass selbstverständlich auch Zwischenmaterialien eingesetzt werden können, welche zum Beispiel als Spülhilfe zwischen dem Einsatz des Einsatzmaterials und dem Folgematerial in zeitlicher Hinsicht eingesetzt werden können.

Ein weiterer Vorteil kann es sein, wenn bei einem erfindungsgemäßen Verfahren die Reihenfolge der Bearbeitung des Wechsels der einzelnen Materialien als Wechselstrategie vorgegeben wird. Eine Wechselstrategie kann dabei unterschiedlichste Gesichtspunkte berücksichtigen. Die Vorgabe der Wechselstrategie in Korrelation mit einer visuellen Führung des Maschinenbedieners führt dazu, dass im Wesentlichen gänzlich unabhängig von seiner persönlichen Erfahrung und seiner Kenntnis der aktuellen expliziten Extrusionsvorrichtung eine optimale und insbesondere die bestmögliche Wechselstrategie verfolgt werden kann. Es erleichtert also nicht nur die Aufgabe des Wechsels, sondern kann durch die Abnahme der Entscheidung der Reihenfolge darüber hinaus die Sicherheit und die Qualität des durchgeführten Wechsels deutlich verbessern.

Bei einem erfindungsgemäßen Verfahren nach dem voranstehenden Absatz ist es vorteilhaft, wenn die Wechselstrategie wenigstens einen der folgenden Wechselparameter berücksichtigt:
- Stabilität des Extrusionsprodukts, insbesondere einer Folienblase
- Temperaturverlauf eines Extruders und/oder eines Extrusionskopfes
- Spüldauer des jeweiligen Materials
- Materialkosten des jeweiligen Materials

Bei der voranstehenden Aufzählung handelt es sich um eine nicht abschließende Liste. Bei der Stabilität des Extrusionsproduktes wird als Parameter für die Wechselstrategie berücksichtigt, dass die Folienblase in möglichst keiner Situation instabil wird und abreißen kann. Das Risiko eines Folienabrisses soll dabei auf ein Minimum reduziert werden. Der Temperaturverlauf eines Extruders und/oder eines Extrusionskopfes wird insbesondere in Korrelation mit den eingesetzten Materialien überwacht. So ist zu vermeiden, dass eine eingesetzte Temperatur mit den eingesetzten Materialien dazu führen könnte, dass zumindest ein Teil dieses Materials innerhalb des Extruders oder des Extrusionskopfes erhärtet. Dies würde zu einer Querschnittsverengung eines freien Strömungsquerschnittes führen und insbesondere zu einem späteren und gänzlich unerwünschten Zeitpunkt mit einem weiteren Aufschmelzen eine unerwartete Rezepturveränderung mit sich bringen. Die Spüldauer des jeweiligen Materials hängt insbesondere von der jeweiligen Viskosität des eingesetzten Materials ab. Nicht zuletzt sind die eingesetzten Materialien auch deutlich unterscheidbar hinsichtlich der zugehörigen Materialkosten. So ist es sinnvoll, diejenigen Materialien besonders spät einzuwechseln bzw. besonders früh auszuwechseln, welche besonders teuer sind. Selbstverständlich kann es von Vorteil sein, wenn eine solche Wechselstrategie vom zugehörigen Benutzer für die einzelnen Strategieparameter bzw. Wechselparameter mit Priorisierungen versehen werden kann, um dieses multikriterielle Optimierungsproblem in besonders einfacher und kostengünstiger Weise zu lösen.

Vorteilhaft ist es weiter, wenn bei einem erfindungsgemäßen Verfahren auf einer Anzeigevorrichtung wenigstens eine der folgenden Bedienhilfen dem Maschinenbediener zur Verfügung gestellt wird:
- Einsatzrezeptur
- Einsatzparameter der Extrusionsvorrichtung
- Folgerezeptur
- Folgeparameter der Extrusionsvorrichtung
- Wechselstatus wenigstens eines Extruders und/oder wenigstens eines Materials
- Spülstatus eines eingesetzten Materials

Bei der voranstehenden Aufzählung handelt es sich um eine nicht abschließende Liste. Unter den Begrifflichkeiten der Folgeparameter und der Einsatzparameter sind zum Beispiel die Temperatur, die Fördergeschwindigkeit zugehöriger Dosierschnecken oder ähnliche Parameter zu verstehen. Eine solche Anzeige, welche insbesondere zwei oder mehr dieser Parameter bzw. Bedienhilfen zur Verfügung stellt, visualisiert also die Wechselstrategie. So wird insbesondere ein unerwünschtes Abweichen von manuellen Bedienschritten des Maschinenbedieners durch entsprechende visuelle Klarstellungen vermieden bzw. dessen Risiko deutlich reduziert. Darüber hinaus wird die aktuelle Statusinformation an den Maschinenbediener weitergegeben und auf diese Weise die Geschwindigkeit und die Sicherheit bei der Durchführung des Wechsels weiter verbessert.

Vorteilhaft ist es ebenfalls, wenn bei einem erfindungsgemäßen Verfahren die Anzeige des zumindest einen Abschlussschritts und/oder des zumindest einen Vorbereitungsschritts an dem Ort der Durchführung des jeweiligen Schritts erfolgt. So kann zum Beispiel mithilfe einer optischen Anzeige, vorzugsweise mit LEDs, und einer entsprechenden Farbwahl ein entsprechender Vorbereitungsschritt und/oder Abschlussschritt an dem Ort der notwendigen Durchführung anzeigbar sein. Beispielsweise kann an einer Sauglanze eine LED anzeigen, dass an dieser Stelle eine Bewegung der Sauglanze in einen anderen Vorlagebehälter stattfinden muss. Dabei kann auch eine entsprechende Farbwahl den unterschiedlichen notwendigen Schritten Rechnung tragen. So kann eine spezifische Farbanzeige auch einen spezifischen Abschlussschritt und/oder Vorbereitungsschritt bedeuten. Selbstverständlich sind auch akustische Anzeigen denkbar. Dabei kann das notwendige Mittel zur Anzeige des jeweiligen Schrittes von einer Anzeigevorrichtung an dem jeweiligen Ort zur Verfügung gestellt werden, oder aber auf eine entsprechende mobile Kommunikationseinheit, zum Beispiel ein Smartphone, des Maschinenbedieners zurückgreifen.

Vorteilhaft ist es ebenfalls, wenn bei einem erfindungsgemäßen Verfahren die Erkennung der Bestätigung an dem Ort des durchgeführten Schrittes erfolgt. Dabei werden im Wesentlichen die gleichen Vorteile erzielt, wie sie im voranstehenden Absatz erläutert worden sind. Hier sind beispielsweise Sensorflächen für eine manuelle Betätigung denkbar. Auch eine automatische Erkennung mittels zugehöriger Sensorsignale ist im Sinne der vorliegenden Erfindung denkbar, so dass noch schneller und sicherer der Wechsel durchgeführt werden kann. Auch hier ist eine entsprechende Applikation auf einer mobilen Kommunikationseinheit oder einem Smartphone des Maschinenbedieners denkbar.

Weiter von Vorteil ist es, wenn bei einem erfindungsgemäßen Verfahren eine Anzeige der Restzeit eines Hauptmaterials erfolgt. Dies erlaubt eine zeitliche Führung, insbesondere der notwendigen Geschwindigkeit für die Durchführung manueller Schritte für den Maschinenbediener. So ist zum Beispiel auch die Restzeit bzw. die Gesamtdauer des Einsatzauftrages angezeigt, so dass auch hier eine große Informationsdichte für den Maschinenbediener zur Verfügung gestellt wird. Selbstverständlich ist auch eine Zeitstrategie für die einzelnen Abschlussschritte bzw. Vorbereitungsschritte anzeigbar, so dass zum Beispiel alle zwei Minuten ein neuer Extruder in einem zugehörigen Folienprodukt "ankommen" soll. So kann ein zu früher Wechsel zwischen den Einsatzmaterialien und den Folgematerialien komponentenspezifisch vermieden werden.

Ein weiterer Vorteil kann es sein, wenn bei einem erfindungsgemäßen Verfahren eine Auswahl des Maschinenbedieners eines zu wechselnden Einsatzmaterials der Einsatzrezeptur erkannt und anschließend dieses ausgewählte Einsatzmaterial mit einer reduzierten Vorlagemenge im Prozess gefahren wird. Damit kann eine Reduktion der Restmenge innerhalb der Vorlagevorrichtung erzielt werden, so dass sowohl in manueller als auch in automatischer Weise eine solche reduzierte Vorlagemenge erreichbar ist. Insbesondere kann auf diese Weise die Reduktion des Restmaterials innerhalb der Vorlagevorrichtung erzielt werden, so dass beim Ablassen des Einsatzmaterials sowohl eine Reduktion des Ausschusses als auch eine Reduktion der notwendigen Ablasszeit erzielbar ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Extrusionsvorrichtung im normalen Betriebszustand,
- Fig. 2: die Ausführungsform der Fig. 1 in der Vorbereitung auf die Durchführung des Materialwechsels,
- Fig. 3: die Ausführungsform der Fig. 1 und 2 beim Erreichen eines Wechselfüllstandes,
- Fig. 4: die Ausführungsformen der Fig. 1 und 3 während des Haltens eines Wechselfüllstandes,
- Fig. 5: die Ausführungsformen der Fig. 1 bis 4 während eines Reinigungsschrittes,
- Fig. 6: die Ausführungsformen der Fig. 1 bis 5 während der Durchführung eines Vorbereitungsschrittes,
- Fig. 7: eine Möglichkeit einer Anzeigevorrichtung und der zugehörigen Darstellung und
- Fig. 8: eine alternative Ausführungsform einer Extrusionsvorrichtung.

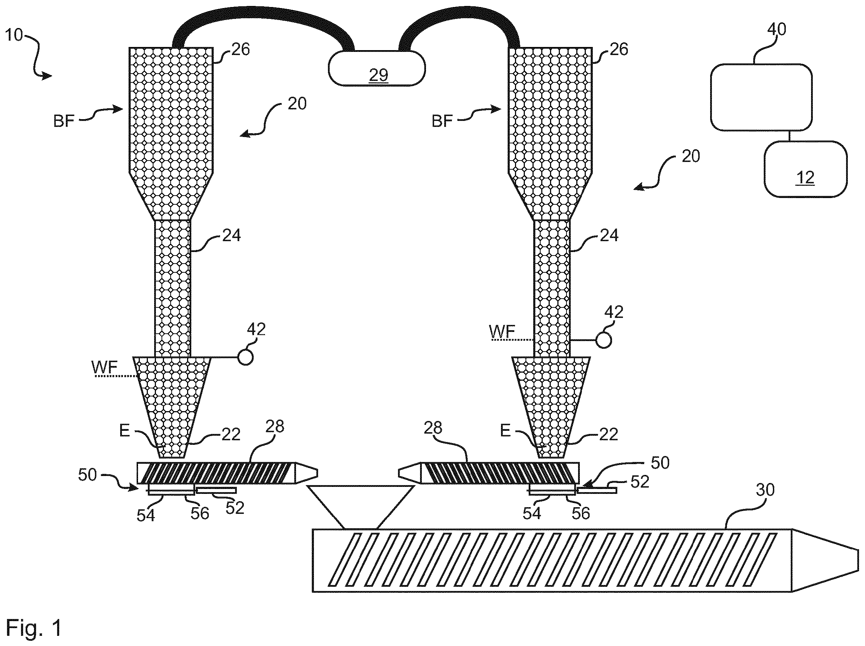

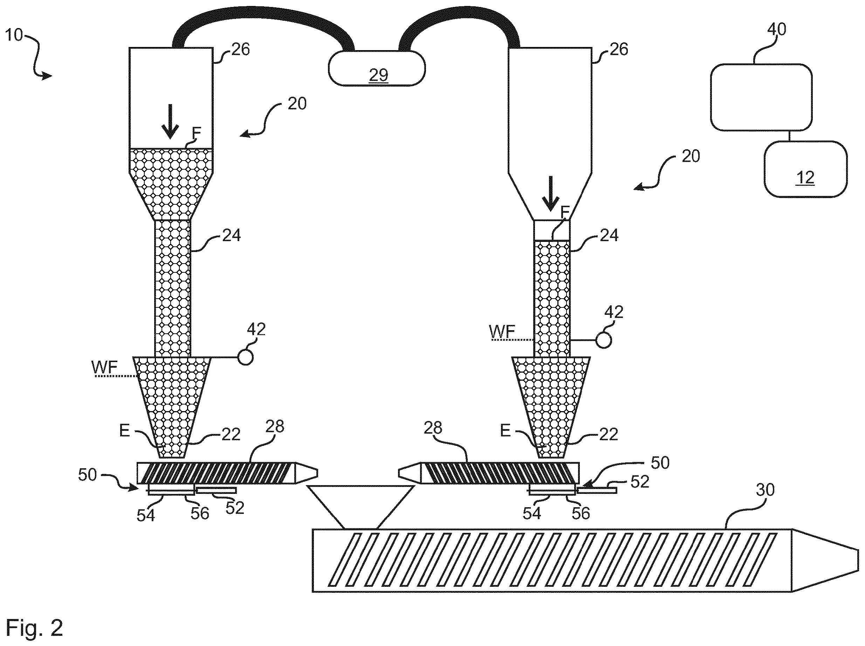

In den Fig. 1 bis 6 ist schematisch eine erfindungsgemäße Extrusionsvorrichtung 10 dargestellt. Diese ist hier mit zwei Vorlagevorrichtungen 20 ausgestattet, wobei selbstverständlich auch drei oder mehr Vorlagevorrichtungen 20 für den zugehörigen Extruder 30 vorgesehen sein können. Eine solche Extrusionsvorrichtung 10 kann auch mit zwei oder mehr Extrudern 30 ausgestattet sein.

Jede Vorlagevorrichtung 20 ist hier mit einem Wägetrichter 22, einem Fallrohr 24 und einem Vorlagebehälter 26 ausgestattet. Von oben nach unten kann auf diese Weise folgender Nachfüllvorgang durchgeführt werden. So wird mithilfe einer Saugförderung 29 von einer Vorlage, zum Beispiel einem Vorlagegebinde oder einem Silo, entsprechendes Einsatzmaterial E angesaugt und in den zugehörigen Vorlagebehälter 26 eingebracht. Dabei wird von oben nach unten die komplette Vorlagevorrichtung 20 gefüllt, wie dies die Fig. 1 zeigt. Am unteren Ende wird das Einsatzmaterial E über eine zugehörige Trichteröffnung 23 an eine Dosierschnecke 28 ausgegeben und von dieser in den zugehörigen Extruder 30 eindosiert. Für die Durchführung eines erfindungsgemäßen Verfahrens ist hier eine Kontrollvorrichtung 40 vorgesehen, welche mit einer Anzeigevorrichtung 12 ausgestattet ist.

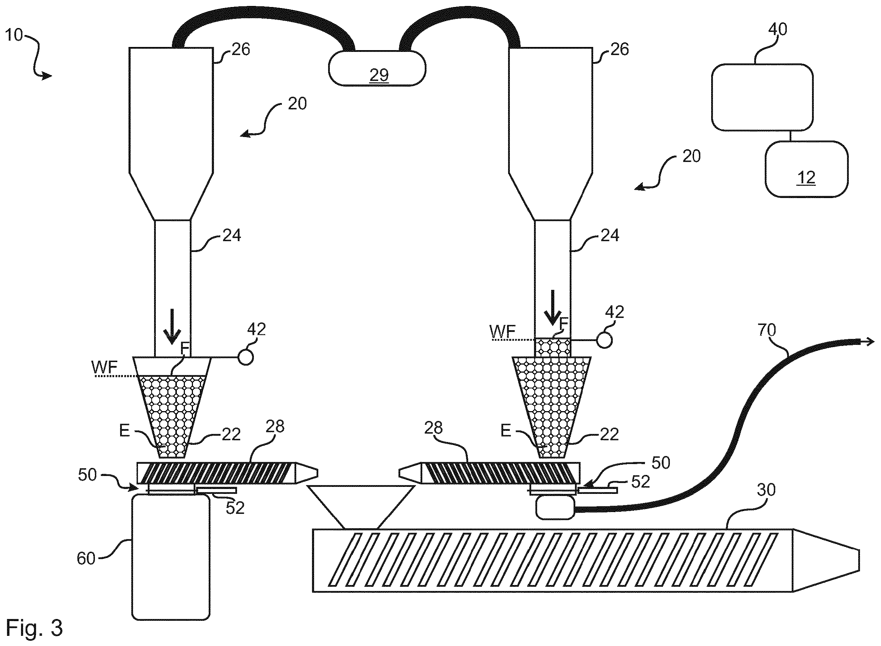

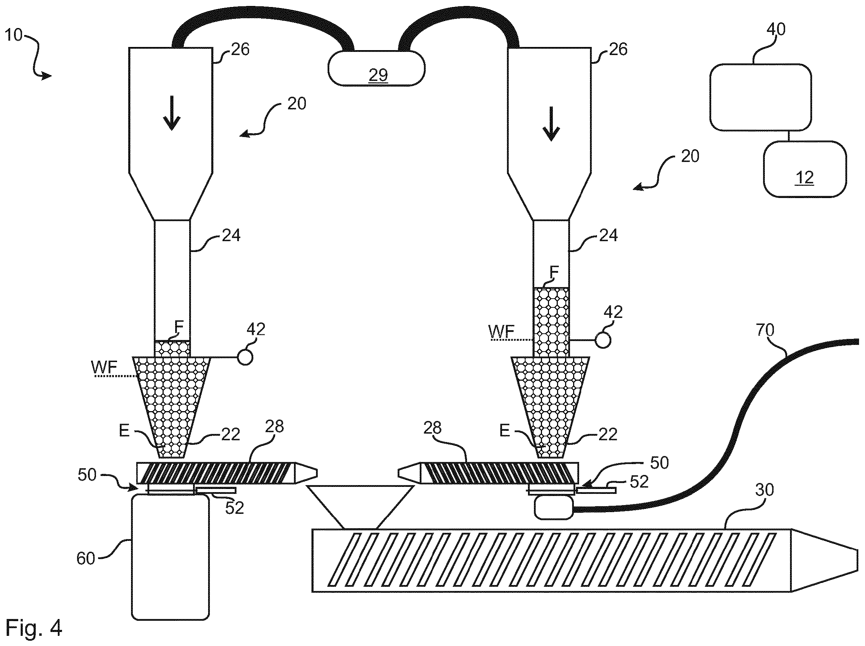

Um einen Materialwechsel von einem Einsatzmaterial E auf ein Folgematerial EF bzw. von einer Einsatzrezeptur ER auf eine Folgerezeptur EFR durchzuführen, sind die Schritte durchzuführen, wie sie nachfolgend mit Bezug auf die Fig. 1 bis 6 näher erläutert werden. Sobald eine Materialwechselanforderung erkannt wird, erfolgt ein Absenken des Füllstandes F des Einsatzmaterials E in den Vorlagevorrichtungen 20. Dies erfolgt solange, bis ein zugehöriger Wechselfüllstand WF in jeder Vorlagevorrichtung 20 erreicht worden ist, welcher für die einzelne Vorlagevorrichtung 20 spezifisch ausgestaltet sein kann. Der Wechselfüllstand WF ist dabei zum Beispiel durch einen zugehörigen Füllstandssensor 42 erfassbar, welcher den zugehörigen aktuellen Füllstand F bei Unterschreiten dieses Wechselfüllstandes WF erkennen kann. In Fig. 3 ist zu erkennen, wie durch fortgesetztes Dosieren mithilfe der Dosierschnecke 28 der Wechselfüllstand WF in den beiden Vorlagevorrichtungen 20 erreicht worden ist. Wenn zu diesem Zeitpunkt noch kein Wechsel erfolgen soll, ist es möglich, durch entsprechendes Nachfüllen über die Saugförderung 29 sicherzustellen, dass ein Absinken des Füllstandes F unter den Wechselfüllstand WF vermieden wird. Dabei wird insbesondere ein einziger Nachfüllschub eingesetzt, um entsprechend dem Füllstand F bei Erreichen und Gefahr des Unterschreitens des Wechselfüllstandes WF wieder zu erhöhen. Die Situation nach der Durchführung des Nachfüllschubes ist in Fig. 4 dargestellt mit dementsprechend erhöhtem Füllstand F des Einsatzmaterials E in den beiden Vorlagevorrichtungen 20.

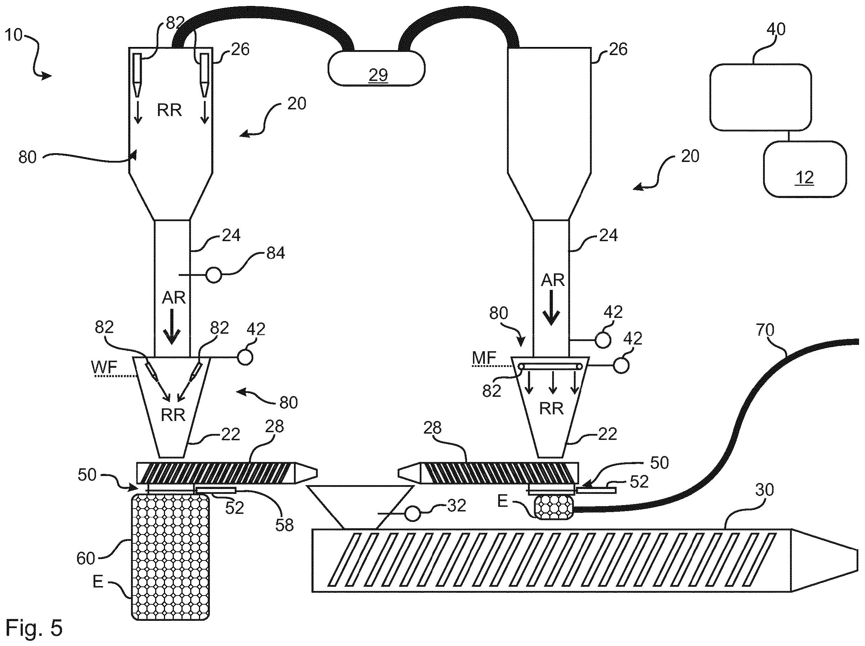

Erfolgt nun ein gewünschter Materialwechsel, so ist in Fig. 5 dargestellt, wie über entsprechende Ablassöffnungen 50 ein Ablassverschluss 52 geöffnet werden kann und das zugehörige Einsatzmaterial E entweder in einen Ablassbehälter 60 abgelassen wird oder über eine zugehörige Rückführvorrichtung 70 an ein Silo weitergeleitet wird.

In Fig. 5 ist dargestellt, wie der Reinigungsprozess abläuft, nachdem das Einsatzmaterial E in einen zugehörigen Ablassbehälter 60 eingebracht worden ist bzw. mithilfe einer Rückführvorrichtung 70 in ein zugehöriges Silo abtransportiert worden ist. In diesem Fall sind die beiden Vorlagevorrichtungen 20 also im Wesentlichen leer und nur noch mit kleinen Restbeständen an Einsatzmaterial E, in Staubform bzw. in Form einzelner Granulatkugeln, bestückt. Um auch diese letzten Reste aus den Vorlagevorrichtungen 20 ausbringen zu können, ist hier eine Reinigungsvorrichtung 80 vorgesehen, welche schematisch in zwei unterschiedlichen Ausführungsformen in der linken Seite und der rechten Seite in den beiden unterschiedlichen Vorlagevorrichtungen 20 dargestellt sind. Dabei kann die Reinigungsvorrichtung 80 eine oder mehrere Reinigungsmittel 82 aufweisen, die an unterschiedlichen Positionen unterschiedliche Wirkungen entfalten können. Bevorzugt ist es, wenn das jeweilige Reinigungsmittel 82 eine Reinigungsrichtung RR aufweist, welche insbesondere mit einer zugehörigen Ablassrichtung AR korreliert. So kann auf diese Weise zum Beispiel in der linken Vorlagevorrichtung 20 mithilfe von angestellten Düsen zur Seitenwand des Wägetrichters 22 eine zyklonartige Luftströmung erzielt werden, um einen entsprechenden Abtransport letzter Partikel des Einsatzmaterials E zu gewährleisten. In dem Vorlagebehälter 26 sind hier zwei Düsen als Reinigungsmittel 82 angeordnet, deren Reinigungsrichtung RR parallel zur Ablassrichtung AR verläuft. Auch hier kann ein Abreinigen von oben für verbleibendes Einsatzmaterial E in der Vorlagevorrichtung 20 erfolgen. In der rechten Vorlagevorrichtung 20 ist innerhalb des Wägetrichters 22 eine ringförmige Düsenanordnung für ein Reinigungsmittel 82 vorgesehen. Hier wird es möglich, in besonders einfacher und kostengünstiger Weise einen zirkulierenden bzw. zylinderförmigen Luftstrom zu erzeugen, um eine besonders effiziente Abreinigung zur Verfügung stellen zu können. Weiter ist in der Ausführungsform der Fig. 5 ein Staubsensor 84 für die linke Vorlagevorrichtung 20 vorgesehen, mit dessen Hilfe die aktuelle Staubsituation erfasst und dementsprechend ein angepasstes Reinigungsprogramm für die Reinigungsvorrichtung 80 ausgewählt werden kann.

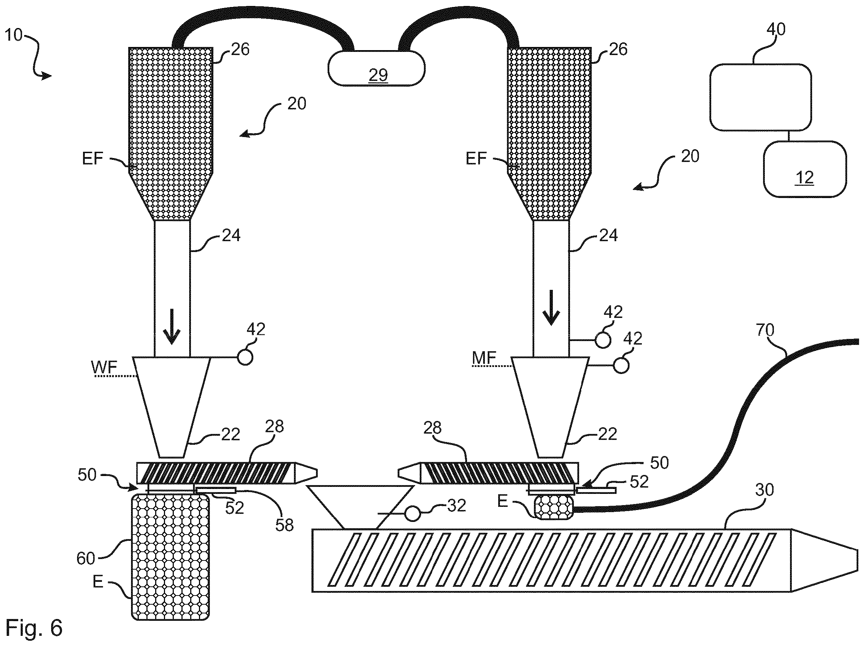

Die Fig. 6 zeigt nun das Ende der Abschlussarbeiten und den Beginn der Vorbereitungsarbeiten für die Folgerezeptur EFR bzw. das Folgematerial EF. Dieses wird nun mithilfe der Saugförderung 29 wieder angesaugt und bereits zum jetzigen Zeitpunkt, also wenn sich innerhalb des Extruders 30 noch das Einsatzmaterial E befindet, wieder in der Vorlagevorrichtung 20 bzw. in dem zugehörigen Vorlagebehälter 26 bevorratet. Somit kann ein einfacher, schneller und vor allem mit deutlich weniger Vermischung versehener Übergang von dem Einsatzmaterial E auf das Folgematerial EF erfolgen.

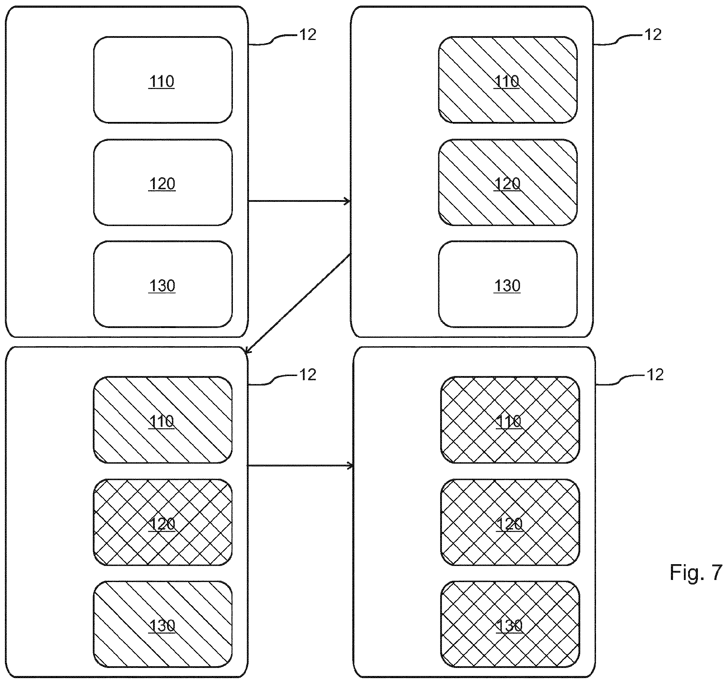

In Fig. 7 ist schematisch dargestellt, was auf einer Anzeigevorrichtung 12 im Verlauf des durchgeführten Wechselverfahrens erfolgen kann bzw. angezeigt werden kann. Dabei sind in der Fig. 7 vier durch Pfeile in sequenzieller Weise aneinandergereihte Darstellungsoptionen offenbart, welche im Verlauf des Wechselverfahrens auf der Anzeigevorrichtung 12 angezeigt werden können. So sind hier drei Felder dargestellt, welche als Rezepturwechselanforderung 110 als Abschlussschritt 120 und als Vorbereitungsschritt 130 spezifiziert werden können. Bei dem Übergang von der Darstellung links oben in die Darstellung rechts oben erfolgt eine Teilschraffur der Rezepturwechselanforderung 110 und des Abschlussschrittes 120. Damit ist zu verstehen, dass eine Rezepturwechselanforderung 110 vorliegt und ein Abschlussschritt 120 durchgeführt werden muss. Beim Übergang nach links unten auf der Anzeigevorrichtung 12 wird nun der Vorbereitungsschritt 130 ebenfalls teilschraffiert und der Abschlussschritt 120 vollschraffiert. Das bedeutet, dass die Kontrolleinheit 40 bereits die Bestätigung über die Beendigung des Abschlussschrittes 120 erhalten hat und nunmehr die Durchführung eines Vorbereitungsschritts 130 anzeigt. Ist dies für sämtliche Abschlussschritte 120 und alle Vorbereitungsschritte 130 erfolgt, so zeigt Fig. 7, dass alle Abschlussschritte 120 und alle Vorbereitungsschritte 130 vollständig schraffiert sind. Dies führt dazu, dass nun die Rezepturwechselanforderung 110 abgeschlossen werden kann und der neue Produktionsbeginn startet.

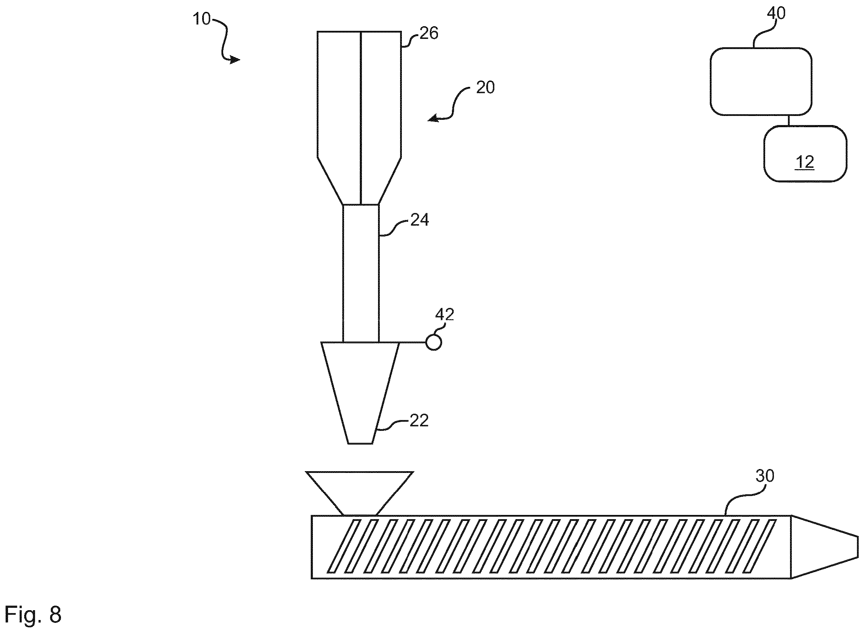

Die Fig. 8 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

### Bezuaszeichenliste

- 10: Extrusionsvorrichtung
- 12: Anzeigevorrichtung
- 20: Vorlagevorrichtung
- 22: Wägetrichter
- 23: Trichteröffnung
- 24: Fallrohr
- 26: Vorlagebehälter
- 28: Dosierschnecke
- 29: Saugförderung
- 30: Extruder
- 32: Notsensor
- 40: Kontrollvorrichtung
- 42: Füllstandssensor
- 50: Ablassöffnung
- 52: Ablassverschluss
- 54: Behälterschnittstelle
- 56: Sensorvorrichtung
- 58: Öffnungssensor
- 60: Ablassbehälter
- 62: Ablassvolumen
- 70: Rückführvorrichtung
- 80: Reinigungsvorrichtung
- 82: Reinigungsmittel
- 84: Staubsensor

- E: Einsatzmaterial
- ER: Einsatzrezeptur
- EF: Folgematerial
- EFR: Folgerezeptur
- BF: Betriebsfüllstand
- WF: Wechselfüllstand
- F: Füllstand
- RR: Reinigungsrichtung
- AR: Ablassrichtung

- 110: Rezepturwechselanforderung
- 120: Abschlussschritt
- 130: Vorbereitungsschritt

## Patentansprüche

1. Verfahren für die schrittweise Führung eines Maschinenbedieners einer Extrusionsvorrichtung (10) für eine Folienmaschine beim Wechsel von einer Einsatzrezeptur (ER) auf eine Folgerezeptur (EFR), aufweisend die folgenden Schritte:
- Erkennen einer Rezepturwechselanforderung (110),
- Anzeigen der Rezepturwechselanforderung (110) für den Maschinenbediener,
- Anzeigen zumindest eines durchzuführenden Abschlussschritts (120) für die Einsatzrezeptur (ER),
- Erkennen einer Bestätigung des Maschinenbedieners für den zumindest einen Abschlussschritt (120),
- Anzeigen zumindest eines durchzuführenden Vorbereitungsschritts (130) für die Folgerezeptur (EFR),
- Erkennen einer Bestätigung des Maschinenbedieners für den zumindest einen Vorbereitungsschritt (130),
- Abschließen des Wechsels von der Einsatzrezeptur (ER) auf die Folgerezeptur (EFR),
**dadurch gekennzeichnet, dass** eine rückgekoppelte Führung des Maschinenbedieners zur Verfügung gestellt wird, so dass eine regelmäßige Interaktion zwischen den Handlungen des Maschinenbedieners, automatisch durchgeführten Schritten des Wechsels und zugehörigen Rückbestätigungen von der Durchführung der Schritte zur Verfügung gestellt wird,
wobei für jeden durchzuführenden Abschlussschritt und jeden Vorbereitungsschritt eine entsprechende Anzeige für den Maschinenbediener erfolgt.

2. Verfahren nach Anspruch 1,
**dadurch gekennzeichnet,**
**dass** nach dem Erkennen einer Bestätigung des Maschinenbedieners wenigstens ein automatischer Schritt als Teil des Wechsels von der Einsatzrezeptur (ER) auf die Folgerezeptur (EFR) durchgeführt wird, insbesondere wenigstens einer der folgenden:
- Reinigen einer Saugförderung (29),
- Reinigen eines Vorlagebehälters (26),
- Reinigen eines Wägetrichters (22),
- Reinigen einer Dosierschnecke (28),
- Befüllen eines Vorlagebehälters (26) mit einem Folgematerial (EF) der Folgerezeptur (EFR),
- Änderung der Temperatur eines Extruders (30).

3. Verfahren nach einem der voranstehenden Ansprüche,
**dadurch gekennzeichnet,**
**dass** beim Wechsel von der Einsatzrezeptur (ER) auf die Folgerezeptur (EFR) jedes Einsatzmaterial (E) der Einsatzrezeptur (ER) auf ein Folgematerial (EF) der Folgerezeptur (EFR) geändert wird.

4. Verfahren nach Anspruch 3,
**dadurch gekennzeichnet,**
**dass** die Reihenfolge der Bearbeitung des Wechsels der einzelnen Materialien (E, EF) als Wechselstrategie vorgegeben wird.

5. Verfahren nach Anspruch 4,
**dadurch gekennzeichnet,**
**dass** die Wechselstrategie wenigstens einen der folgenden Wechselparameter berücksichtigt:
- Stabilität des Extrusionsprodukts, insbesondere einer Folienblase
- Temperaturverlauf eines Extruders (30) und/oder eines Extrusionskopfes
- Spüldauer des jeweiligen Materials (E, EF)
- Materialkosten des jeweiligen Materials (E, EF)

6. Verfahren nach einem der voranstehenden Ansprüche,
**dadurch gekennzeichnet,**
**dass** auf einer Anzeigevorrichtung (12) wenigstens eine der folgenden Bedienhilfen dem Maschinenbediener zur Verfügung gestellt werden:
- Einsatzrezeptur (ER)
- Einsatzparameter der Extrusionsvorrichtung (10)
- Folgerezeptur (EFR)
- Folgeparameter der Extrusionsvorrichtung (10)
- Wechselstatus wenigstens eines Extruders (30) und/oder wenigstens eines Materials (E, EF)
- Spülstatus eines eingesetzten Spülmaterials

7. Verfahren nach einem der voranstehenden Ansprüche,
**dadurch gekennzeichnet,**
**dass** die Anzeige des zumindest einen Abschlussschritts (120) und/oder des zumindest einen Vorbereitungsschritts (130) an dem Ort der Durchführung des jeweiligen Schrittes erfolgt.

8. Verfahren nach einem der voranstehenden Ansprüche,
**dadurch gekennzeichnet,**
**dass** die Erkennung der Bestätigung an dem Ort des durchgeführten Schrittes erfolgt.

9. Verfahren nach einem der voranstehenden Ansprüche,
**dadurch gekennzeichnet,**
**dass** eine Anzeige der Restzeit eines Hauptmaterials (E, EF) erfolgt.

10. Verfahren nach einem der voranstehenden Ansprüche,
**dadurch gekennzeichnet,**
**dass** eine Auswahl des Maschinenbedieners eines zu wechselnden Einsatzmaterials (E) der Einsatzrezeptur (ER) erkannt und anschließend dieses ausgewählte Einsatzmaterial (E) mit einer reduzierten Vorlagemenge im Prozess gefahren wird.

## Claims

1. Method for the step-by-step guidance of a machine operator of an extrusion device (10) for a film machine when changing from an application formula (ER) to a subsequent formula (EFR), having the following steps of:
- identifying a formula change request (110),
- displaying the formula change request (110) for the machine operator,
- displaying at least one final step (120) which has to be carried out for the application formula (ER),
- Identifying a confirmation of the machine operator for the at least one final step (120),
- displaying at least one preparation step (130) which has to be carried out for the subsequent formula (EFR),
- identifying a confirmation of the machine operator for the at least one preparation step (130),
- terminating the change from the application formula (ER) to the subsequent formula (EFR),
**characterized in that**
a guidance of the machine operator with feedback is provided so that a regular interaction between the actions of the machine operator, automatically carried out steps of the change and associated reconfirmations of the steps being carried out is provided.
wherein for each final step which has to be carried out and each preparation step a corresponding display is carried out for the machine operator.

2. Method according to claim 1,
**characterized in that,**
after the identification of a confirmation of the machine operator, at least one automatic step is carried out as part of the change from the application formula (ER) to the subsequent formula (EFR), in particular at least one of the following:
- cleaning a suction conveyor (29),
- cleaning a storage container (26),
- cleaning a weighing funnel (22),
- cleaning a metering screw (28),
- filling a storage container (26) with a subsequent material (EF) of the subsequent formula (EFR),
- changing the temperature of an extruder (30).

3. Method according to any one of the preceding claims,
**characterized in that,**
when changing from the application formula (ER) to the subsequent formula (EFR), each application material (E) of the application formula (ER) is changed to a subsequent material (EF) of the subsequent formula (EFR).

4. Method according to claim 3,
**characterized in that**
the sequence of the processing of the change of the individual materials (E, EF) is predetermined as a change strategy.

5. Method according to claim 4,
**characterized in that**
the change strategy takes into account at least one of the following change parameters:
- stability of the extrusion product, in particular a film bubble,
- temperature profile of an extruder (30) and/or an extrusion head,
- cleaning time of the respective material (E, EF),
- material costs of the respective material (E, EF).

6. Method according to any one of the preceding claims,
**characterized in that**
on a display device (12) at least one of the following operating aids is provided to the machine operator:
- application formula (ER),
- application parameter of the extrusion device (10),
- subsequent formula (EFR),
- subsequent parameter of the extrusion device (10),
- change status of at least one extruder (30) and/or at least one material (E, EF),
- cleaning status of a cleaning material used.

7. Method according to any one of the preceding claims,
**characterized in that**
the display of the at least one final step (120) and/or the at least one preparation step (130) is carried out at the location at which the respective step is carried out.

8. Method according to any one of the preceding claims,
**characterized in that**
the identification of the confirmation is carried out at the location at which the step is carried out.

9. Method according to any one of the preceding claims,
**characterized in that**
a display of the remaining time of a main material (E, EF) is carried out.

10. Method according to any one of the preceding claims,
**characterized in that**
a selection of the machine operator of an application material (E) which is intended to be changed with the application formula (ER) is identified and subsequently this selected application material (EP) is carried with a reduced storage quantity in the process.

## Revendications

1. Procédé pour le guidage pas à pas d'un opérateur machine d'un dispositif d'extrusion (10) pour une machine à feuilles lors du changement d'une formulation d'utilisation (ER) à une formulation consécutive (EFR), présentant les étapes suivantes :
- la détection d'une requête de changement de formulation (110),
- l'affichage d'une requête de changement de formulation (110) pour l'opérateur machine,
- l'affichage au moins d'une étape de fin (120) à réaliser pour la formulation d'utilisation (ER),
- la détection d'une confirmation de l'opérateur machine pour l'au moins une étape de fin (120),
- l'affichage d'au moins une étape de préparation à réaliser (130) pour la formulation consécutive (EFR),
- la détection d'une confirmation de l'opérateur machine pour l'au moins une étape de préparation (130),
- la fin du changement de la formulation d'utilisation (ER) à la formulation consécutive (EFR),
**caractérisé en ce que**
un guidage rétrocouplé de l'opérateur machine est mis à disposition de sorte qu'une interaction régulière entre les actions de l'opérateur machine, les étapes réalisées automatiquement du changement et les confirmations en retour afférentes de la réalisation des étapes soit mise à disposition,
dans lequel un affichage correspondant pour l'opérateur machine est effectué pour chaque étape de fin à réaliser et chaque étape de préparation.

2. Procédé selon la revendication 1,
**caractérisé en ce que**
après la détection d'une confirmation de l'opérateur machine, au moins une étape automatique est réalisée comme partie du changement de la formulation d'utilisation (ER) à la formulation consécutive (EFR), en particulier au moins une des opérations suivantes :
- le nettoyage d'un transport sous vide (29),
- le nettoyage d'un récipient de stockage (26),
- le nettoyage d'une trémie de pesée (22),
- le nettoyage d'une vis sans fin de dosage (28),
- le remplissage d'un récipient de stockage (26) avec un matériau consécutif (EF) de la formulation consécutive (EFR),
- la modification de la température d'une extrudeuse (30).

3. Procédé selon l'une quelconque des revendications précédentes,
**caractérisé en ce que**
lors du changement de la formulation d'utilisation (ER) à la formulation consécutive (EFR), chaque matériau d'utilisation (E) de la formulation d'utilisation (ER) est modifié à un matériau consécutif (EF) de la formulation consécutive (EFR).

4. Procédé selon la revendication 3,
**caractérisé en ce que**
l'ordre de traitement du changement des matériaux (E, EF) individuels est prédéfini comme stratégie de changement.

5. Procédé selon la revendication 4,
**caractérisé en ce que**
la stratégie de changement tient compte d'au moins un des paramètres de changement suivants :
- la stabilité du produit d'extrusion, en particulier d'une bulle en feuille
- la courbe de température d'une extrudeuse (30) et/ou d'une tête d'extrusion
- la durée de rinçage du matériau respectif (E, EF)
- les coûts du matériau respectif (E, EF)

6. Procédé selon l'une quelconque des revendications précédentes,
**caractérisé en ce que**
au moins une des aides de commande suivantes sont mises à disposition de l'opérateur machine sur un dispositif d'affichage (12) :
- la formulation d'utilisation (ER)
- le paramètre d'utilisation du dispositif d'extrusion (10)
- la formulation consécutive (EFR)
- le paramètre consécutif du dispositif d'extrusion (10)
- le statut de changement d'au moins une extrudeuse (30) et/ou d'au moins un matériau (E, EF)
- le statut de rinçage d'un matériau de rinçage utilisé

7. Procédé selon l'une quelconque des revendications précédentes,
**caractérisé en ce que**
l'affichage de l'au moins une étape de fin (120) et/ou de l'au moins une étape de préparation (130) est effectué à l'endroit de la réalisation de l'étape respective.

8. Procédé selon l'une quelconque des revendications précédentes,
**caractérisé en ce que**
la détection de la confirmation est effectuée à l'endroit de l'étape réalisée.

9. Procédé selon l'une quelconque des revendications précédentes,
**caractérisé en ce que**
un affichage du temps restant d'un matériau principal (E, EF) est effectué.

10. Procédé selon l'une quelconque des revendications précédentes,
**caractérisé en ce que**
une sélection de l'opérateur machine d'un matériau d'utilisation à changer (E) de la formulation d'utilisation (ER) est détectée et ensuite ce matériau d'utilisation sélectionné (E) entre dans le processus avec une quantité de stockage réduite.
